# EUROPEAN PATENT SPECIFICATION

(11) **EP 0 833 252 B1**
(45) Date of publication and mention of the grant of the patent: **06.03.2002**
(21) Application number: 97307660.7
(22) Date of filing: 29.09.1997
(51) Int. Cl.: G06F 1/26, H04M 1/73

(54) **Memory management method for portable terminal**
Speicherverwaltungsverfahren für tragbares Datenendgerät
Procédé de gestion de mémoire pour terminal portable

(30) Priority: 30.09.1996 KR 9643259
(43) Date of publication of application: 01.04.1998
(73) Proprietor: Samsung Electronics Co., Ltd., Suwon City, Kyungki-do (KR)
(72) Inventor: Kim, Han-Sang, Pangbae-dong, Seocho-gu, Seoul (KR)
(74) Representative: Chugg, David John

(56) References cited:
- EP-A- 0 392 895
- EP-A- 0 557 736
- WO-A-93/19419
- GB-A- 2 291 991

## Description

The present invention relates to a memory management method for a portable terminal using a non-volatile memory, and more particularly, to a memory management method for a portable terminal which can prolong the lifetime of an internal battery in the portable terminal.

As the desire of computer user's for increased information processing capability rises, the number of programs to be used increases and the size of each program grows. As a result, the required capacity of a memory contained in a computer becomes larger and larger. The memory is divided into volatile memory and non-volatile memory. The non-volatile memory is a storage device for maintaining stored information even when power is not applied thereto. An EEPROM or flash memory is a known example of a non-volatile memory.

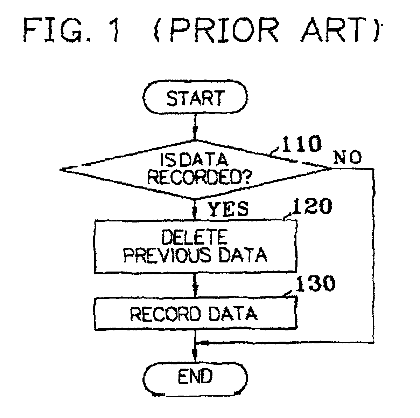

Figure 1 is a flowchart diagram for explaining a data recording method of a general recording system using a non-volatile memory as a storage device. In step 110, it is judged whether or not a recording command for recording data is input. If the data recording command is input, previous data already stored in a corresponding region in a memory is deleted for the first time (step 120). Then, new data is recorded in the corresponding region in the memory (step 130). That is, when new data is recorded, the previous data recorded in the corresponding region in the memory should be deleted according to a predetermined sequence, to then record the new data. Thus, a controller such as a CPU should continuously check the state of the memory for recording and deletion of data. Such a continuous memory check of the controller causes unnecessary power consumption, and power consumption due to deletion and recording of data occurs. Also, in a portable terminal which uses a limited capacity of power source such as a galvanic cell, a power operating time is shortened due to power consumption resulting from frequent deletion and recording of data.

Thus, a portable terminal using a non-volatile memory requires a new memory management method capable of prolonging the lifetime of an internal cell.

With a view to solve or reduce the above problems, it is an aim of preferred embodiments of the present invention to provide a memory management method in a portable terminal, in which a recording operation is first performed in an unused memory region, an address value for data to be deleted is registered in a delete queue, and then the data to be deleted is deleted all at a time when external power is supplied, to thereby prolong an operation time of an internal cell.

EP 392895 (Sundisk Corp) discloses memory management in relation to flash EEPROMS. Flash EEPROMS need to be erased before information can be placed into them. In this citation, to manage erasing operations, the EEPROM is divided into sectors where all cells within each sector are erasable together. Each sector is then addressed separately and can be selected for erase as and when required. The selection and subsequent erase operations performed in this citation are made under the control of a controller. The marking of sectors for erase is done by setting the output of an associated register to a high condition. Once all the desired sectors have been selected, the controller issues a global erase command. The sectors are erased by applying a pulse of erasing voltage followed by a read operation to verify if the cells have been erased correctly. If correct erasing has not occurred, then further pulsing and verifying is carried out, until the cells are verified as being properly erased. If such repeated pulsing and verifying is required, then after the first set of pulse and verify has been carried out, that group of selected sectors which have been correctly verified are removed from the group of selected sectors to prevent them from being over erased. This citation also mentions that the system may be configured to be erased differently by software on a fixed basis between different systems and further states that such flexibility will allow the controller to adaptively change the amount of erasing being done by monitoring the voltage level in a system, such as a lap top computer.

According to an aspect of the present invention, there is provided a memory management method in a portable terminal, in which power is supplied from an internal cell or an external power source and a non-volatile memory is used as a storage device, the memory management method comprising the steps of: (a) setting a delete queue in order to register corresponding address values in a memory region in which data to be deleted has been recorded; (b) judging whether or not a recording command for recording data in the memory is input; (c) judging whether or not an idle region exists in the memory when the recording command is applied; (d) recording data in the corresponding idle region when the idle region exists; (e) judging whether or not a delete command for deleting the data recorded in the memory is input; (f) registering corresponding address values in the memory region in which the data to be deleted has been recorded in the delete queue when the delete command is input; (g) judging whether or not power is supplied from the external power source; and (h) deleting the address values registered in the delete queue and the data of the corresponding regions indicated by the address values when the power is supplied for the external power source.

Preferably, said step (a) sets the delete queue in a first-in-first-out form so that the corresponding address values in the memory regions to be deleted are deleted in registered sequence.

The method may comprise the step of deleting, in sequence, corresponding address values and data in the corresponding regions indicated by the address values from the oldest address value registered in the delete queue as needed when the idle region is less than a region necessary for recording the data.

Preferably, it is judged whether or not said external power is supplied via the output signal of an input/output (I/O) terminal connected between a power supply circuit and a central processing unit (CPU).

Preferably, said CPU judges that external power is supplied when the output signal of said I/O terminal is an interrupt signal or a polling signal.

For a better understanding of the invention, and to show how embodiments of the same may be carried into effect, reference will now be made, by way of example, to the accompanying diagrammatic drawings, in which:
Figure 1 is a flowchart diagram for explaining a data recording method of a general recording system using a non-volatile memory as a storage device;
Figure 2 is a block diagram showing the structure of a portable terminal to which the present invention is applied;
Figure 3 is a flowchart diagram for explaining a memory management method for a portable terminal according to a preferred embodiment of the present invention; and
Figures 4A through 4F are views for explaining data deletion and delete queue in the memory by the Figure 3 method.

Preferred embodiments of the present invention will be described with reference to the accompanying drawings.

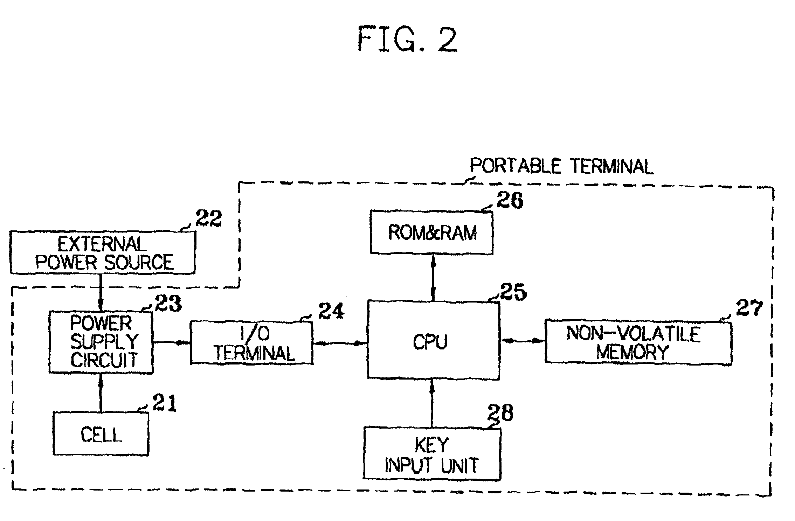

In Figure 2, a portable terminal includes a cell 21 which is a main power supply. The cell 21 supplies power to a power supply circuit 23. Also, the power supply circuit 23 can receive power from an external power source 22 in addition to the power supplied from the cell 21. The external power source 22 is positioned at the outside of the portable terminal, and is connected to the power supply circuit 23 in order to supply power to the portable terminal such as the cell 21 or supply power for charging the cell 21. The power supply circuit 23 supplies the power applied from the cell 21 or the external power source 22 to a central processing unit (CPU) 25. An input/output (I/O) terminal 24 is connected between the power supply circuit 23 and the CPU 25 to discriminate the power applied from both power sources 21 and 22. The I/O terminal 24 detects a point of time at which power is supplied from the external power source 22 to the power supply circuit 23. Also, the Figure 2 apparatus includes a ROM and RAM 26 and a non-volatile memory 27. The CPU 25 controls recording and deletion of the data. A key input unit 28 for receiving a key signal from a user is connected to the CPU 25.

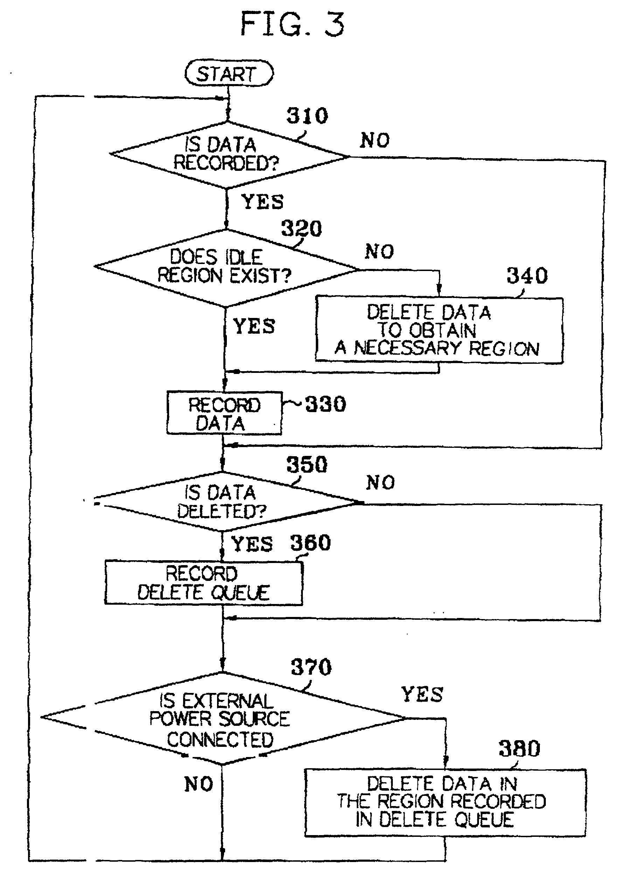

Figure 3 is a flowchart diagram for explaining a memory management method for a portable terminal according to a preferred embodiment of the present invention. The memory management method for a portable terminal according to the present invention will be described in more detail with reference to Figures 2 and 3.

The CPU 25 detects a key signal input from the key input unit 28 and judges whether a data recording command is input or a data recording command is generated fro the data produced during execution of a program (step 310). If a data recording command is not input, the program jumps to step 350. However, if a data recording command is input, it is judged whether or not an idle region in which data is not recorded exists in the non-volatile memory 27 (step 320). If an idle region does exist, data is recorded in the idle region (step 330). If no idle region large enough to accommodate the amount of data to be recorded exists, then a minimum recording region is made for recording the data. That is, previously recorded data is deleted, so that a region large enough for recording the data is obtained (step 340). Then, the program returns to step 330.

Subsequently, it is judged whether or not a data deletion command is input (step 350). If a data deletion command is not input, the program returns to step 370. However, if a data deletion command is input, address values of the data to be deleted are recorded in a delete queue (step 360). Then, the CPU 25 judges whether or not the external power source 22 is connected to the portable terminal (step 370). It can be seen via the I/O terminal 24 whether or not the external power source 22 is connected. The I/O terminal 24 confirms connection with or disconnection from the external power source 22 at an interrupt mode or a polling mode. When the external power source 22 is connected to the portable terminal and external power is supplied thereto, the CPU 25 deletes all at once the address values recorded in the delete queue and the data of the corresponding region indicated by the address values (step 380). Meanwhile if the external power source 22 is not connected thereto, the program returns to step 310.

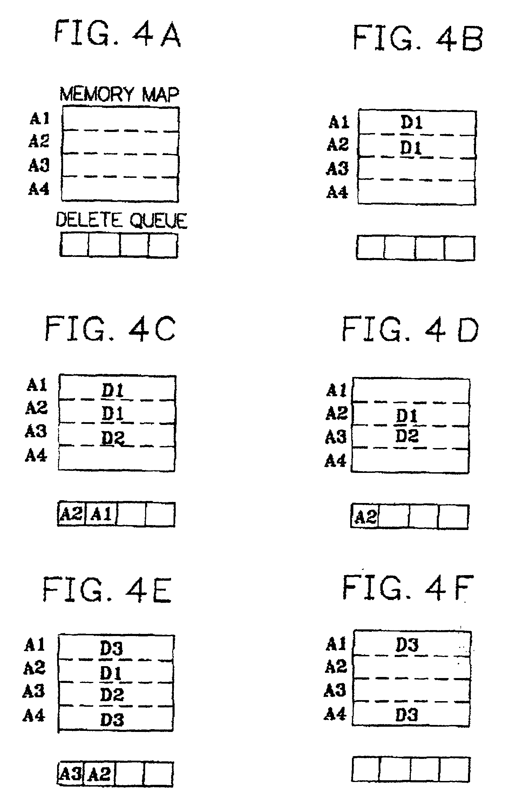

Figures 4A through 4F are views for explaining data recording and deletion in the memory by the memory management method. Figures 4A through 4F show a memory map showing data recording regions and addresses A1, A2, A3 and A4 of each uniformly divided recording region in the non-volatile memory 27, and a delete queue for registering the address values of data to be deleted among the data recorded in the memory map. The delete queue has a first-in-first-out pattern in which a memory region to be deleted is sequentially registered. The delete queue is set in a portion in the non-volatile memory 27, or set in a certain region of an external memory such as a ROM and RAM 26.

Figure 4A shows a state where no data is recorded in the non-volatile memory 27. Figure 4B shows a state where data D1 is recorded in the corresponding regions having the address values A1 and A2 of the non-volatile memory 27. That is, when data is recorded, data is recorded in the empty regions having address values A1, A2, A3 and A4 of the non-volatile memory 27 as shown in Figure 4A. Figure 4C shows a change of the memory map and delete queue when data D2 is applied to update the data D1 recorded in the non-volatile memory 27. Here, regions which can be used for recording are idle regions having address values of A3 and A4. The data D2 for updating the data D1 is recorded in the empty regions. Also, the address values A1 and A2 of the memory map in which the previous data D1 has been recorded are registered in the delete queue one after the other.

Meanwhile, idle regions are insufficient for recording data D3, for example, only the idle region is left as shown in Figure 4C. Here, if data D3 to be recorded requires two idle regions, the oldest address values among the address values registered in the delete queue and the previous data recorded in the corresponding regions indicated by the oldest address values are deleted. Therefore, the oldest address value A1 is deleted, and then the previous data which is D1 recorded in the regions indicated by the address values A1 is deleted. Figure 4D shows a memory map from which the data has been deleted in the region A1 and a delete queue from which the address value A1 has been deleted. When a necessary idle region is secured in the above operation, data D3 to be recorded is recorded in the regions indicated by the address values A1 and A4. Figure 4E shows that an address value A3 in the memory region in which the previous data D2 has been recorded is recorded in the delete queue when data D3 to be newly recorded is update data with respect to the previously recorded data D2. Figure 4F shows that address values A3 and A2 registered in the delete queue and data D1 and D2 in the regions indicated by the address values are deleted all at a time when external power is input.

As described above, the present invention minimizes a deletion process for previously, recorded data when data is recorded, to thereby reduce power consumption of a cell in the portable terminal using a limited capacity of the cell and prolong the lifetime at its maximum. Also, the present invention can recover data when a user desires recovery of the data, unless the data corresponding to address values recorded in the delete queue is deleted all at a time.

## Claims

1. A memory management method in a portable terminal in which power is supplied from an internal cell (21) or an external power source (22) and a non-volatile memory (27) is used as a storage device, the memory management method comprising the steps of:
(a) setting up a delete queue to register corresponding address values in a memory region in which data to be deleted has been recorded;
(b) judging (STEP 310) whether or not a recording command for recording data in the memory (27) is input;
(c) judging (STEP 320) whether or not an idle region exists in the memory (27) when the recording command is applied;
(d) recording (STEP 330) data in the corresponding idle region when the idle region exists;
(e) judging (STEP 350) whether or not a delete command for deleting the data recorded in the memory (27) is input;
(f) registering (STEP 360) corresponding address values in the memory region in which the data to be deleted has been recorded, in the delete queue when the delete command is input;
(g) judging (STEP 370) whether or not power is supplied from the external power source (22); and
(h) deleting (STEP 380) the address values registered in the delete queue and the data of the corresponding regions indicated by the address values when the power is supplied from the external power source (380).

2. The memory management method according to claim 1, wherein said step (a) sets the delete queue in a first-in-first-out form so that the corresponding address values in the memory regions to be deleted are deleted in registered sequence.

3. The memory management method according to claim 1 or 2, further comprising the step of deleting, in sequence, corresponding address values and data in the corresponding regions indicated by the address values from the oldest address value registered in the delete queue as needed when the idle region is less than a region necessary for recording the data.

4. The memory management method according to claim 1, 2 or 3, wherein it is judged whether or not said external power is supplied via the output signal of an input/output (I/O) terminal connected between a power supply circuit (23) and a central processing unit (CPU) (25).

5. The memory management method according to claim 4, wherein said CPU (25) judges that external power is supplied when the output signal of said I/O terminal (24) is an interrupt signal.

6. The memory management method according to claim 4, wherein said CPU (25) judges that external power is supplied when the output signal of said I/O terminal (24) is a polling signal.

## Patentansprüche

1. Speicherverwaltungsverfahren für ein tragbares Endgerät, bei dem Energie von einer intemen Zelle (21) oder einer externen Energiequelle (22) zugeführt wird und ein nichtflüchtiger Speicher (27) als eine Speichervorrichtung eingesetzt wird, wobei das Speicherverwaltungsverfahren die folgenden Schritte umfasst:
(a) Aufstellen einer Lösch-Warteschlange, um entsprechende Adressenwerte in einem Speicherbereich zu registrieren, in dem zu löschende Daten aufgezeichnet worden sind;
(b) Feststellen (Schritt 310), ob ein Aufzeichnungs-Befehl zum Aufzeichnen von Daten in dem Speicher (27) eingegeben wird oder nicht;
(c) Feststellen (Schritt 320), ob ein Leerbereich in dem Speicher (27) vorhanden ist oder nicht, wenn der Aufzeichnungs-Befehl erfolgt;
(d) Aufzeichnen (Schritt 330) von Daten in dem entsprechenden Leerbereich, wenn der Leerbereich vorhanden ist;
(e) Feststellen (Schritt 350), ob ein Lösch-Befehl zum Löschen von in dem Speicher (27) aufgezeichneten Daten eingegeben wird oder nicht;
(f) Registrieren (Schritt 360) entsprechender Adressenwerte in dem Speicherbereich, in dem die zu löschenden Daten aufgezeichnet worden sind, in der Lösch-Warteschlange, wenn der Lösch-Befehl eingegeben wird;
(g) Feststellen (Schritt 370), ob Energie von der externen Energiequelle (220) zugeführt wird oder nicht; und
(h) Löschen (Schritt 380) der in der Lösch-Warteschlange registrierten Adressenwerte und der Daten der entsprechenden Bereiche, die durch die Adressenwerte angezeigt werden, wenn die Energie von der extemen Energiequelle (380) zugeführt wird.

2. Speicherverwaltungsverfahren nach Anspruch 1, wobei in dem Schritt (a) die Lösch-Warteschlange in einem FIFO-Modus eingestellt wird, so dass die entsprechenden Adressenwerte in den Speicherbereichen, die zu löschen sind, in registrierter Abfolge gelöscht werden.

3. Speicherverwaltungsverfahren nach Anspruch 1 oder 2, das des Weiteren den Schritt des Löschens entsprechender Adressenwerte und Daten in den entsprechenden Bereichen, die von den Adressenwerten angezeigt werden, der Reihenfolge nach von dem ältesten Adressenwert an, der in der Lösch-Warteschlange registriert ist, nach Bedarf umfasst, wenn der Leerbereich kleiner ist als ein Bereich, der zum Aufzeichnen der Daten erforderlich ist.

4. Speicherverwaltungsverfahren nach Anspruch 1, 2 oder 3, wobei über das Ausgangssignal eines Ein-/Ausgabe-Anschlusses (I/O), der zwischen eine Energiezuführschaltung (23) und eine zentrale Verarbeitungseinheit (CPU) (25) geschaltet ist, festgestellt wird, ob die externe Energie zugeführt wird oder nicht.

5. Speicherverwaltungsverfahren nach Anspruch 4, wobei die CPU (25) feststellt, dass die externe Energie zugeführt wird, wenn das Ausgangssignal des Ein-/ Ausgabe-Anschlusses (24) ein Unterbrechungssignal ist.

6. Speicherverwaltungsverfahren nach Anspruch 4, wobei die CPU (25) feststellt, dass die exteme Energie zugeführt wird, wenn das Ausgangssignal des Ein-/ Ausgabe-Anschlusses (24) ein Abrufsignal ist.

## Revendications

1. Procédé de gestion de mémoire dans un terminal portatif, dans lequel de l'énergie est fournie à partir d'une pile interne (21) ou bien d'une source externe d'énergie (22), et dans lequel une mémoire non volatile (27) est utilisée en tant que dispositif de mémorisation, le procédé de gestion de la mémoire comprenant les étapes de :
(a) établissement d'une file d'attente de suppression à enregistrer, de manière correspondante à des valeurs d'adresses dans une zone de mémoire dans laquelle ont été enregistrées des données à supprimer ;
(b) détermination (PAS 310) du fait qu'une instruction d'enregistrement, pour un enregistrement de données dans la mémoire(27), a été entrée ou non ;
(c) détermination (PAS 320) du fait qu'une zone libre existe ou non dans la mémoire (27) lorsque l'instruction d'enregistrement est appliquée ;
(d) enregistrement (PAS 330) des données dans la zone libre correspondante, lorsque cette zone libre existe ;
(e) détermination (PAS 350) du fait qu'une instruction de suppression est entrée ou non, pour la suppression des données enregistrées dans la mémoire (27) ;
(f) enregistrement (PAS 360) de valeurs d'adresses correspondantes dans la zone de mémoire, dans laquelle ont été enregistrées les données à supprimer, dans la file d'attente de suppression lorsque l'instruction de suppression est entrée ;
(g) détermination (PAS 370) du fait que de l'énergie est fournie ou non à partir de la source externe d'énergie (22) ; et
(h) suppression (PAS 380) des valeurs d'adresses, enregistrées dans la file d'attente de suppression, et des données des zones correspondantes, indiquées par les valeurs d'adresses, lorsque l'énergie est fournie à partir de la source externe d'énergie (380).

2. Procédé de gestion de mémoire selon la revendication 1, dans lequel ladite étape (a) établit la file d'attente de suppression sous une forme FIFO (premier entré, premier sorti) de telle manière que les valeurs d'adresses correspondantes dans les zones de mémoire à effacer, soient supprimées dans l'ordre enregistré.

3. Procédé de gestion de mémoire selon la revendication 1 ou 2, comprenant en outre l'étape de suppression, dans l'ordre, de valeurs d'adresses et des données correspondantes dans les zones correspondantes, indiquées par les valeurs d'adresses en partant de la valeur d'adresse la plus ancienne, enregistrée dans la file d'attente de suppression, en fonction des besoins lorsque la zone libre est inférieure à une zone requise pour l'enregistrement des données.

4. Procédé de gestion de mémoire selon la revendication 1, 2 ou 3, dans lequel il est déterminé si ladite énergie externe est fournie ou non au moyen d'un signal de sortie d'un terminal d'entrée/sortie (E/S) monté entre un circuit d'alimentation en courant (23) et une unité centrale de traitement (CPU) (25).

5. Procédé de gestion de mémoire selon la revendication 4, dans lequel ladite unité centrale de traitement (25) détermine que de l'énergie externe est fournie lorsque le signal de sortie dudit terminal d'entrée/sortie (24) est un signal d'interruption.

6. Procédé de gestion de mémoire selon la revendication 4, dans lequel ladite unité centrale de traitement (25) détermine que de l'énergie externe est fournie lorsque le signal de sortie dudit terminal d'entrée/sortie (24) est un signal d'interrogation.
